# EUROPEAN PATENT APPLICATION

(11) **EP 4 715 231 A1**
(43) Date of publication of application: **25.03.2026**
(21) Application number: 25203878.1
(22) Date of filing: 23.09.2025
(51) Int. Cl.: F16C 19/06, F16C 19/52, F16C 41/00, H01R 13/24, H02K 5/173

(54) **SHAFT GROUNDING MEMBER FOR ROLLING BEARING, AND ROLLING BEARING UNIT**

(30) Priority: 24.09.2024 JP 2024165350; 18.04.2025 JP 2025068845
(71) Applicant: NSK-WARNER K.K., Tokyo 141-8560 (JP)
(72) Inventor: FURUYA, Masatomo, Fukuroi-shi, Shizuoka, 437-8535 (JP); SETOI, Mutsumi, Fukuroi-shi, Shizuoka, 437-8535 (JP); MURAMATSU, Fumimasa, Fukuroi-shi, Shizuoka, 437-8535 (JP)
(74) Representative: Berggren Oy

(57) **Abstract**

A shaft grounding member for a rolling bearing, in which one bearing ring is a fixed ring and the other bearing ring is a rotating ring, includes: a spring plate including an annular portion and a plurality of elastic portions extending continuously from the annular portion in a radial shape, the spring plate being made of a thin plate of a conductive material; and a soft conductive member mounted on a surface of the elastic portion facing the rotating ring. The soft conductive member is configured to abut against a side surface of the rotating ring. The spring plate includes a plurality of bent portions provided at a portion of the annular portion facing a side surface of the fixed ring so as to be bent in an axial direction, the plurality of bent portions being deformed to apply a pressing force to the fixed ring.

## Description

### BACKGROUND

### 1. Field of the Invention

The present invention relates to a shaft grounding member for a rolling bearing that prevents occurrence of electrolytic corrosion or generation of electromagnetic noise of a rolling bearing in a rolling bearing unit, and the rolling bearing unit provided with the shaft grounding member for a rolling bearing.

### 2. Description of the Related Art

In recent years, there has been a progress in practical use of an electric vehicle in which an electric motor serving as a drive source is provided inside or in the vicinity of the wheels to drive the wheels. Such a drive motor is generally called an in-wheel motor. The general in-wheel motor has a structure in which a stator is fixed to a motor housing and a rotor is provided on the inner diameter side of the stator with a gap in the radial direction, and is a so-called inner rotor type motor. As a drive method for the in-wheel motor, a brushless DC motor driven by an inverter is often used in consideration of the performance and the control performance of the motor.

In the method of driving with the inverter, a potential difference occurs between the stator and the rotor due to the parasitic capacitance between the stator and the rotor. This potential difference generates a so-called shaft voltage and shaft current, and when this shaft current passes through the rolling bearing that supports the rotor, a phenomenon called "electrolytic corrosion" occurs that damages the rolling bearing.

Specifically, the current flows locally in the contact portion between the raceway surfaces of the outer ring and the inner ring of the rolling bearing and the rolling elements, and the raceway surface or the rolling surface is melted and becomes uneven. This not only roughens the rolling surface and the rolling element surface of the bearing, causing the noise and the vibration, but also affects the life of the bearing if excessive electrolytic corrosion occurs.

In order to prevent the electrolytic corrosion of the rolling bearing, a conductive member is sometimes used. For example, JP2011-135720A and JP2011-135722A propose a conductive member including a contact body that electrically conducts with the rotor of the motor, an elastic body that presses the contact body toward the rotor, and a storage portion that stores the contact body and the elastic body, in which the storage portion is provided in a motor housing and electrically connected to the motor stator via the motor housing.

JP2020-127257A proposes a grounding device in which the distal end portion of a broom-shaped conductive fiber is brought into contact with the outer peripheral surface of a rotating shaft.

Further, JP2002-146568A proposes an electrolytic corrosion prevention device in which an annular seat portion in contact with the end surface of a bearing outer ring is bent into a wave washer shape, an elastic conductor including a contact piece that is extended from the inner side of the annular seat portion and that is in contact with the vicinity of the end surface center portion of the rotating shaft is used, and the surface of the annular seat portion is pressed by the lid-shaped wall of a bearing housing and electrically conducted in the state in which the contact piece abuts against the vicinity of the end surface center portion of the rotating shaft fitted to the bearing inner ring, and in which the annular seat portion is overlapped with the end surface of the bearing outer ring fitted in the bearing housing.

Further, JPH04-8820U proposes that a rod-shaped conductive brush is accommodated in a support hole formed in either one of two bearing rings, the distal end of the conductive brush is biased toward the other bearing ring and is brought into sliding contact with the other bearing ring by the elastic member, and the two bearing rings are electrically conducted.

JP2017-060401A proposes that the distal end portion of a shaft grounding brush made of a carbon filament abuts against an extension shaft, a shaft voltage generated in the shaft is grounded and removed, and electrolytic corrosion generated in a bearing is prevented.

In the bearing, measures against electromagnetic noise generated by electromagnetic interference are required, and various devices for preventing the generation of electromagnetic noise have been proposed. For example, JP2024-130948A proposes that a rod-shaped carbon brush having conductivity is accommodated between an inner ring and a metal ring, and the distal end of the carbon brush attached to the metal ring is biased against the inner ring by a spring and brought into sliding contact with the inner ring, thereby imparting conductivity performance to the conductive bearing and allowing a current flowing through the conductive bearing to flow outside the system via the metal ring and the brush to remove electromagnetic noise.

JP2023-01 8214A proposes a conductive device capable of releasing electromagnetic noise by preventing the generation of an oil film formed between a conductive rubber lip mounted on a rotating shaft and a metal housing by a centrifugal force or controlling the oil film thickness. By preventing the generation of an oil film or reducing the oil film thickness, it is possible to reduce the electrical resistance of the oil film and release electromagnetic noise from the rotating shaft to the housing.

JP2022-139252A proposes that a rolling element having conductivity is rolled between an outer ring and an inner ring in a state in which an oil film is cut to secure a path for charges, and the impedance between the outer ring and the inner ring or the impedance of the entire bearing is significantly reduced to improve the electromagnetic noise prevention effect and the electrolytic corrosion prevention effect.

JP2000-244180A proposes an electromagnetic noise prevention device in which a metal case of an electric motor and a rotating shaft in the electric motor are electrically conducted by a conduction unit such as a sliding contact member, so that electromagnetic noise induced in the rotating shaft is released to a metal electric motor housing grounded to a vehicle body.

However, in the technique described in any piece of the related arts, the abrasion powder generated from the conductive member may contaminate the lubricating oil or the grease composition sealed for lubrication and may damage the raceway surface or the rolling surface. The mating member of the conductive member may be damaged and the abrasion powder may be generated.

Specifically, in JP2011-135720A and JP2011-135722A, the contact body, the elastic body, and the storage body are metal members and are brought into sliding contact with one another due to the vibration of the motor, and thus the metal powder is generated. It is necessary to provide the contact body, the elastic body, and the storage body in the motor housing, and a space therefor is also required.

In JP2020-127257A, the distal end portion of the broom-shaped conductive fiber is brought into contact with the outer peripheral surface of the rotating shaft. However, in order to increase the contact area between the distal end portion of the broom-shaped conductive fiber and the rotating shaft as compared to when the distal end portion of the broom-shaped conductive fiber and the rotating shaft are simply brought into contact, the broom-shaped conductive fiber is brought into contact with the outer peripheral surface of the rotating shaft in the state of being bent. That is, since the distal end portion of the broom-shaped conductive fiber is in contact with the outer peripheral surface of the rotating shaft with a relatively strong pressing force, the abrasion powder is generated. At the same time, the outer peripheral surface of the rotating shaft, which is the mating member of the broom-shaped conductive fiber, is also damaged.

In JP2002-146568A, both the elastic conductor and the rotating shaft are made of metal, and the metal powder is generated when the elastic conductor and the rotating shaft come into sliding contact. At the same time, the end surface of the rotating shaft, which is the mating member of the elastic conductor, is damaged.

In JPH04-8820U, since the distal end of the rod-shaped conductive brush is in contact with the other bearing ring in the biased state, the abrasion powder of the conductive brush is generated. At the same time, the other bearing ring, which is the mating member of the conductive brush, is also damaged. Further, it is necessary to form a support hole for accommodating the conductive brush and the elastic member on the bearing ring, and a large load is applied to the bearing ring.

In JP2017-060401A, since the distal end portion of the shaft grounding brush made of the carbon filament abuts against the extension shaft, the abrasion powder of the shaft grounding brush is generated. At the same time, the extension shaft, which is the mating member of the shaft grounding brush, is also damaged.

In the bearing disclosed in the related arts, frictional heat may be generated due to sliding contact between the conductive member and the mating member during use, and thus the durability of the bearing is reduced. Since the peripheral speed of the rotating member has been improved with the recent improvement in performance of the motor, further prevention of the temperature rise is required.

In JP2000-244180A, a wear-resistant member is selected as the sliding contact member, but the effect of reducing wear is not sufficient.

A different type of material such as aluminum different from the bearing material may be used for a housing or a rotating shaft as a fixing member to which the fixed ring is fitted, and in this case, creep or fitting looseness may occur between the fixed ring and the fixing member due to a temperature change. Even when a conductive member is used in an environment in which such creep or fitting looseness may occur, it is required to ensure electrical contact of the conductive member and attain stable conductivity.

### SUMMARY

An object of the present invention is to provide a space-saving and inexpensive shaft grounding member and a rolling bearing unit provided with the shaft grounding member. Accordingly, in addition to preventing the generation of the abrasion powder from a conductive member or the abrasion powder accompanying sliding contact between the conductive member and a mating member, and minimizing damage to the mating member, the shaft grounding member and the rolling bearing unit can stably secure excellent conductivity, can prevent creep in a rolling bearing, and can be used with the existing bearing without requiring new processing on the bearing and without the restriction on the type of the bearing.

The above object of the present invention is achieved by the following configuration [1] related to a shaft grounding member for a rolling bearing.
[1] A shaft grounding member for a rolling bearing, the shaft grounding member being mounted on a rolling bearing unit including a rolling bearing in which one bearing ring is a fixed ring and the other bearing ring is a rotating ring, the shaft grounding member including: a spring plate including an annular portion and a plurality of elastic portions extending continuously from the annular portion in a radial shape, the spring plate being made of a thin plate of a conductive material; and a soft conductive member mounted on a surface of the elastic portion facing the rotating ring, in which the soft conductive member is configured to abut against a side surface of the rotating ring, and in which the spring plate includes a plurality of bent portions provided at a portion of the annular portion facing a side surface of the fixed ring so as to be bent in an axial direction, the plurality of bent portions being deformed to apply a pressing force to the fixed ring.
   A preferred embodiment of the present invention related to the shaft grounding member for a rolling bearing relates to the following [2] to [9].
[2] The shaft grounding member for a rolling bearing according to [1], in which each of the bent portions is a cut-and-raised piece in which a portion between a pair of notches cut out from a peripheral edge of the annular portion is bent in the axial direction.
[3] The shaft grounding member for a rolling bearing according to [1], in which a portion between a pair of notches cut out from a peripheral edge of the annular portion of the plurality of bent portions includes one cut-and-raised piece bent to one side in the axial direction and the other cut-and-raised piece bent to the other side in the axial direction.
[4] The shaft grounding member for a rolling bearing according to [1], in which each of the bent portions is a folded piece in which a portion between a pair of notches cut out from a peripheral edge of the annular portion or a portion extending from the peripheral edge of the annular portion in a radial direction is folded back in the axial direction.
[5] The shaft grounding member for a rolling bearing according to [1], in which a portion between a pair of notches cut out from a peripheral edge of the annular portion of the plurality of bent portions or a portion extending from the peripheral edge of the annular portion in a radial direction includes one folded piece folded back to one side in the axial direction and the other folded piece folded back to the other side in the axial direction.
[6] The shaft grounding member for a rolling bearing according to [1], in which the annular portion is pressed against the side surface of the fixed ring with a spacer interposed therebetween.
[7] The shaft grounding member for a rolling bearing according to [1], in which the soft conductive member is made of at least one selected from a resin-impregnated non-woven fabric, a non-woven fabric, a resin-impregnated woven fabric, a woven fabric, a resin-impregnated soft porous body, and a soft porous body.
[8] The shaft grounding member for a rolling bearing according to [1], in which the plurality of elastic portions of the spring plate are bent toward the rotating ring.
[9] The shaft grounding member for a rolling bearing according to [1], in which the plurality of elastic portions of the spring plate are formed flush with the annular portion.
   The above object of the present invention is achieved by the following configuration [10] related to a shaft grounding member for a rolling bearing.
[10] A shaft grounding member for a rolling bearing, the shaft grounding member being mounted on a rolling bearing unit including a rolling bearing in which one bearing ring is a fixed ring and the other bearing ring is a rotating ring, the shaft grounding member including: a spring plate including an annular portion and a plurality of elastic portions extending continuously from the annular portion in a radial shape, the spring plate being made of a thin plate of a conductive material; and a soft conductive member mounted on a surface of the elastic portion facing a rotating member to which the rotating ring is fitted, in which the soft conductive member is configured to abut against a side surface of the rotating member, and in which the spring plate includes a plurality of bent portions provided at a portion of the annular portion facing a side surface of the fixed ring so as to be bent in an axial direction, the plurality of bent portions being deformed to apply a pressing force to the fixed ring.
   A preferred embodiment of the present invention related to the shaft grounding member for a rolling bearing relates to the following [11] to [18].
[11] The shaft grounding member for a rolling bearing according to [10], in which each of the bent portions is a cut-and-raised piece in which a portion between a pair of notches cut out from a peripheral edge of the annular portion is bent in the axial direction.
[12] The shaft grounding member for a rolling bearing according to [10], in which a portion between a pair of notches cut out from a peripheral edge of the annular portion of the plurality of bent portions includes one cut-and-raised piece bent to one side in the axial direction and the other cut-and-raised piece bent to the other side in the axial direction.
[13] The shaft grounding member for a rolling bearing according to [10], in which each of the bent portions is a folded piece in which a portion between a pair of notches cut out from a peripheral edge of the annular portion or a portion extending from the peripheral edge of the annular portion in a radial direction is folded back in the axial direction.
[14] The shaft grounding member for a rolling bearing according to [10], in which a portion between a pair of notches cut out from a peripheral edge of the annular portion of the plurality of bent portions or a portion extending from the peripheral edge of the annular portion in a radial direction includes one folded piece folded back to one side in the axial direction and the other folded piece folded back to the other side in the axial direction.
[15] The shaft grounding member for a rolling bearing according to [10], in which the annular portion is pressed against the side surface of the fixed ring with a spacer interposed therebetween.
[16] The shaft grounding member for a rolling bearing according to [10], in which the soft conductive member is made of at least one selected from a resin-impregnated nonwoven fabric, a non-woven fabric, a resin-impregnated woven fabric, a woven fabric, a resin-impregnated soft porous body, and a soft porous body.
[17] The shaft grounding member for a rolling bearing according to [10], in which the plurality of elastic portions of the spring plate are bent toward the rotating ring.
[18] The shaft grounding member for a rolling bearing according to [10], in which the plurality of elastic portions of the spring plate are formed flush with the annular portion.
   The above object of the present invention is achieved by the following configuration [19] related to a rolling bearing unit.
[19] A rolling bearing unit including: a rolling bearing in which one bearing ring is a fixed ring and the other bearing ring is a rotating ring; and the shaft grounding member for a rolling bearing according to any one of [1] to [18].

Hereinafter, the "shaft grounding member for a rolling bearing" is simply referred to as a "shaft grounding member", and the "rolling bearing unit" is simply referred to as a "bearing unit".

In the present invention, since the spring plate provided in the shaft grounding member includes the plurality of bent portions that are bent in the axial direction at the portion of the annular portion facing the side surface of the fixed ring and that apply the pressing force between the fixed ring and the bent portions by deforming themselves, it is possible to stably secure the conductivity with the fixed ring or the fixing member to which the fixed ring is fitted without providing another member such as a disc spring or a wave spring. Therefore, it is possible to prevent a decrease in conductivity due to looseness of fixation of the shaft grounding member, occurrence of vibration, or the like, and it is possible to reduce a shaft voltage which is a potential difference between the rotating member and the fixing member, to prevent electrolytic corrosion of the rolling bearing, and to release electromagnetic noise through between the rotating member and the fixing member. Occurrence of creep in the rolling bearing can be prevented.

The shaft grounding member according to the present invention includes a soft conductive member mounted on an elastic portion of a spring plate and abutting against the side surface of a rotating ring or the side surface of a rotating member. The biasing force of the soft conductive member to the side surface of the rotating ring or the side surface of the rotating member by the spring plate is not fairly strong, and the abrasion powder is less likely to be generated. Moreover, since the soft conductive member is made of a soft material, damage to the rotating ring and the rotating member that are the mating member is also small.

The shaft grounding member for a rolling bearing and the rolling bearing unit can be used with the existing rolling bearing without requiring any processing on the rolling bearing and without the restriction on the type of the rolling bearing, and thus the versatility is fairly high. Further, the spring plate is a thin plate, and an increase in space for the bearing unit to be mounted can be minimized.

The bearing unit according to the present invention is provided with the shaft grounding member according to the present invention. Therefore, generation of the abrasion powder and damage to the mating member are prevented, and further, the bearing unit is highly versatile and does not require an increase in space.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
FIG. 1A is a perspective view showing an example of a shaft grounding member applied to an inner ring rotating type bearing unit according to a first embodiment of the present invention, and FIG. 1B is a front view thereof;
FIG. 2A is a cross-sectional view taken along a line A-A in FIG. 1B, and FIG. 2B is an enlarged cross-sectional view showing a bent portion between an annular portion and an elastic portion;
FIG. 3 is an enlarged cross-sectional view corresponding to FIG. 2B, showing another example of a cut-and-raised piece;
FIG. 4A is a cross-sectional view showing a state in which the shaft grounding member shown in FIGS. 1A and 1B is mounted on a housing and showing a state before the cut-and-raised piece is pressed against the outer ring side, and FIG. 4B is a cross-sectional view showing a state in which the shaft grounding member shown in FIGS. 1A and 1B is mounted on a bearing unit;
FIG. 5A is a perspective view of a shaft grounding member according to a first modification of the first embodiment, and FIG. 5B is a front view thereof;
FIG. 6 is a cross-sectional view taken along a line B-B in FIG. 5B;

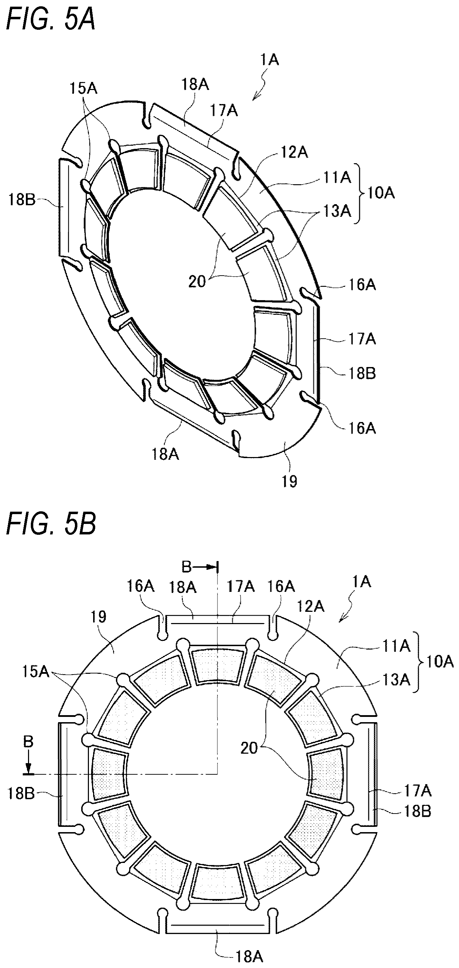

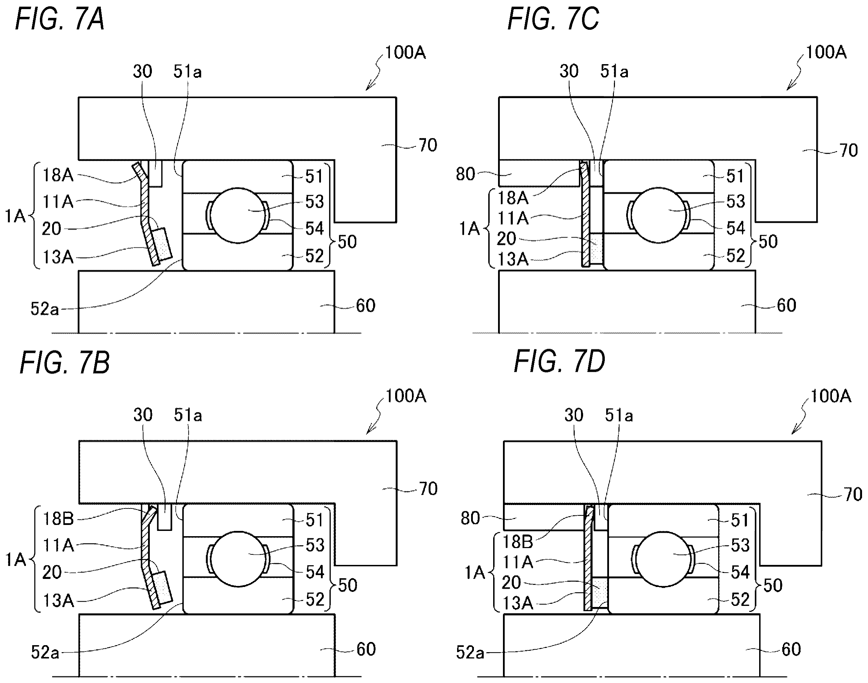

FIGS. 7A to 7D are views showing a state in which the shaft grounding member shown in FIGS. 5A and 5B is mounted on a housing, in which FIG. 7A is a cross-sectional view showing a state before one cut-and-raised piece is pressed against the outer ring side, FIG. 7B is a cross-sectional view showing a state before the other cut-and-raised piece is pressed against the outer ring side, FIG. 7C is a cross-sectional view showing a state in which the one cut-and-raised piece is pressed against the outer ring side via a spacer and the shaft grounding member is mounted on a bearing unit, and FIG. 7D is a cross-sectional view showing a state in which the other cut-and-raised piece is pressed against the outer ring side via the spacer and the shaft grounding member is mounted on the bearing unit;
FIG. 8A is a perspective view showing an example of a shaft grounding member according to a second modification of the first embodiment of the present invention, and FIG. 8B is a front view thereof;
FIG. 9 is a cross-sectional view taken along a line C-C in FIG. 8B;
FIG. 10A is a cross-sectional view showing a state in which the shaft grounding member shown in FIGS. 8A, 8B, and 9 is mounted on the housing and showing a state before a folded piece is pressed against the outer ring side, and FIG. 10B is a cross-sectional view showing a state in which the folded piece is pressed against the outer ring side via the spacer and the shaft grounding member is mounted on the bearing unit;
FIG. 11A is a front view showing an example of a shaft grounding member applied to a bearing unit on the outer ring rotating side as a shaft grounding member according to a second embodiment of the present invention, and FIG. 11B is a cross-sectional view taken along a line D-D in FIG. 11A;
FIG. 12A is a cross-sectional view showing a state in which the shaft grounding member shown in FIGS. 11A and 11B is mounted on a fixing member and showing a state before the cut-and-raised piece is pressed against the inner ring side, and FIG. 12B is a cross-sectional view showing a state in which the cut-and-raised piece is pressed against the inner ring side via the spacer and the shaft grounding member is mounted on the bearing unit;
FIG. 13 is a cross-sectional view showing an example of an inner ring rotating type bearing unit provided with a shaft grounding member according to a third embodiment of the present invention;
FIG. 14 is a cross-sectional view showing an example of an inner ring rotating type bearing unit provided with another shaft grounding member according to the third embodiment of the present invention;
FIG. 15 is a cross-sectional view showing an example of an outer ring rotating type bearing unit provided with a shaft grounding member according to a fourth embodiment of the present invention;
FIG. 16 is a cross-sectional view showing an example of an outer ring rotating type bearing unit provided with another shaft grounding member according to the fourth embodiment of the present invention;
FIG. 17 is a cross-sectional view corresponding to FIG. 2A, showing a shaft grounding member according to a modification of the present invention; and
FIG. 18 is a cross-sectional view showing an example of a bearing unit provided with the shaft grounding member shown in FIG. 17.

### DETAILED DESCRIPTION OF THE INVENTION

Hereinafter, embodiments of the present invention will be described in detail with reference to the drawings. The present invention is not limited to the embodiments to be described below, and can be implemented by being freely changed without departing from the gist of the present invention.

### First Embodiment: Shaft Grounding Member and Bearing Unit for Inner Ring Rotation

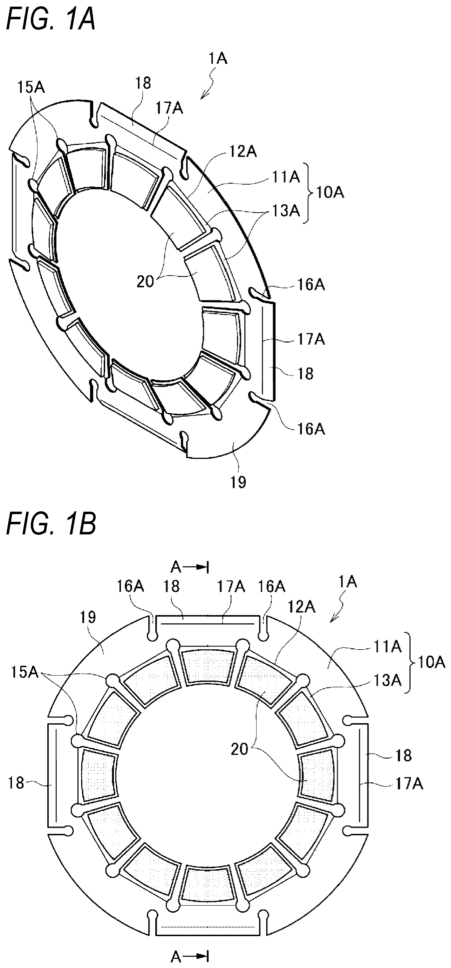

In a first embodiment, a shaft grounding member applied to an inner ring rotating type bearing unit in which a rotating ring is an inner ring and the bearing unit will be described with reference to FIGS. 1A to 4B.

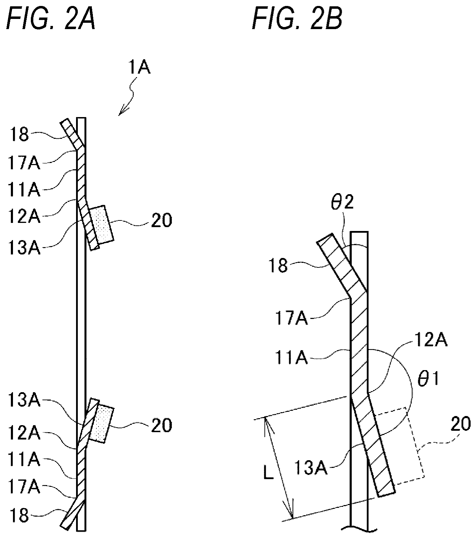

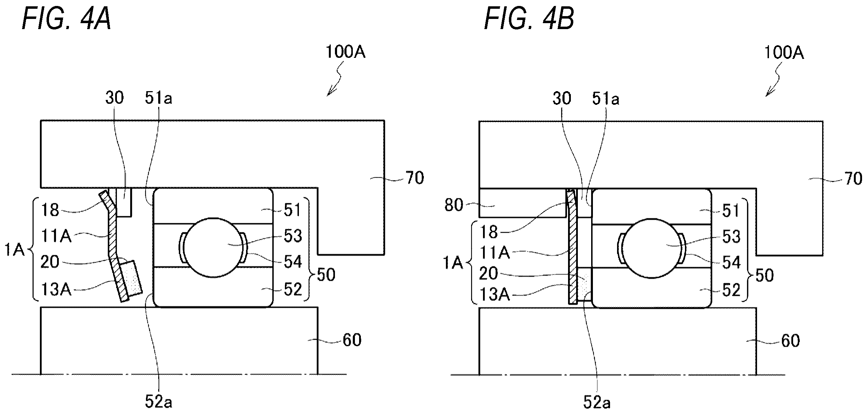

As shown in FIGS. 1A and 1B, a shaft grounding member 1A for inner ring rotation includes a spring plate 10A including an annular portion 11A and a plurality of elastic portions 13A that are bent at an inner diameter side end portion 12A of the annular portion 11A and that extend in a radial shape toward the center of the annular portion 11A. As shown in FIGS. 2A, 2B, 4A, and 4B, when the elastic portion 13A is mounted on a bearing unit 100A, the elastic portion 13A is bent toward the right side in the figure so as to approach an inner ring 52 of a rolling bearing 50. Notches 15A are formed on both sides of the bent portion between the elastic portion 13A and the annular portion 11A, so that the elastic portion 13A is in a state of being easily bent.

The spring plate 10A is entirely made of a thin plate made of a conductive material such as metal. When the conductive material is metal, stainless steel is preferable because stainless steel is easy to process and is less prone to rust.

A soft conductive member 20 is mounted on the surface of each elastic portion 13A on the side facing the inner ring 52 of the rolling bearing 50, and the spring plate 10A and the soft conductive member 20 constitute the shaft grounding member 1A. The soft conductive member 20 is mounted on the elastic portion 13A using the adhesive.

As the soft conductive member 20, a member obtained by mixing or supporting a conductive material in a soft base material, or a commercially available member referred to as a "conductive sheet" or the like can be used. Examples of the soft base material include at least one selected from a porous body and a resin-impregnated porous body. As the porous body, paper, cloth, a nonwoven fabric, a resin sheet, a sponge which is a soft porous body, or the like can be used. Among these materials, as the base material, it is preferable to use at least one selected from a nonwoven fabric, a woven fabric and a soft porous body such as a sponge, and a resin-impregnated nonwoven fabric, a resin-impregnated woven fabric and a resin-impregnated soft porous body such as a sponge. When a resin-impregnated material obtained by impregnating a porous body with resin is used as the base material of the soft conductive member 20, the skeleton is coated with resin, thereby improving the strength of the soft conductive member 20 to a desired level while maintaining the soft characteristics. Therefore, in particular, it is more preferable to use, as the base material, at least one selected from a resin-impregnated nonwoven fabric, a resin-impregnated woven fabric and a resin-impregnated soft porous body such as a sponge.

When a resin-impregnated porous body is used as the base material, a thermosetting resin is preferably used as the resin with which the porous body is impregnated. The thermosetting resin may be any varnish-shaped resin that can be impregnated into the base material and that is thermosetting, and examples of the thermosetting resin include a phenol resin, a modified phenol resin, an epoxy resin, a modified epoxy resin, a polyimide resin, a silicone resin, a polyester resin, a polyurethane resin, and a rubber resin.

As the conductive material to be mixed into or supported on the soft base material, it is preferable to use at least one selected from metal fibers such as silver, copper, gold, aluminum, and stainless steel, pulverized products and powders thereof, conductive carbon fibers, and pulverized products and powders thereof.

As shown in FIG. 2B, when mounted on the bearing unit 100A, a bending angle θ1 between the annular portion 11A and the elastic portion 13A is appropriately set according to a length (L) of the elastic portion 13A and the size of the soft conductive member 20 such that the soft conductive member 20 abuts against a side surface 52a of the inner ring 52 of the rolling bearing 50. By the bending angle θ1, the biasing force of the soft conductive member 20 to the side surface 52a of the inner ring 52 of the rolling bearing 50 can be adjusted. By decreasing the bending angle θ1, the biasing force can be strengthened, and conversely, by increasing the bending angle θ1, the biasing force can be weakened.

The planar shape of the soft conductive member 20 is not limited, and may be a rectangular shape in addition to the fan shape shown in FIG. 1A. A plurality of small pieces may be used.

A plurality of notches 16A are formed in the annular portion 11A from the outer peripheral edge toward the inner peripheral side, and a cut-and-raised piece 18 (a bent portion) bent from a starting point 17A is formed between the adjacent notches 16A and 16A. The cut-and-raised piece 18 is bent in the axial direction such that the distal end is inclined toward the back side of the paper surface of FIG. 1B, that is, bent in a direction opposite to the axial direction in which the elastic portion 13A is bent. The distal end of the cut-and-raised piece 18 is formed in a linear shape, and is located on the inner diameter side with respect to a virtual circle connecting a plurality of arc portions in which the cut-and-raised piece 18 is not formed and in which the outer circumference is arc-shaped.

The cut-and-raised piece 18 may be bent in the axial direction such that the distal end thereof is inclined toward the front side of the paper surface of FIG. 1B. Although the cut-and-raised pieces 18 are formed at four positions at equal intervals in FIGS. 1A and 1B, the number of cut-and-raised pieces 18 is not limited. Further, as shown, the plurality of cut-and-raised pieces 18 are alternately formed with a plurality of arc portions, but are not limited thereto, and may be formed over the entire circumference of the annular portion 11A.

As shown in FIG. 2B, a cut-and-raised angle θ2 of the cut-and-raised piece 18 with respect to the annular portion 11A is not limited, and is appropriately set according to a target biasing force (a pressing force). The biasing force can be weakened by reducing the cut-and-raised angle θ2, and conversely, the biasing force can be increased by increasing the cut-and-raised angle θ2.

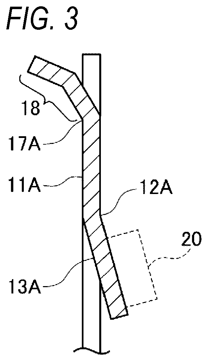

In FIG. 2B, the cut-and-raised piece 18 is formed by one bending process and has a flat surface, but as shown in FIG. 3, the cut-and-raised piece 18 may be bent a plurality of times (twice in the example in the drawing) in a plurality of stages to form a stepped cross section.

Such a spring plate 10A is formed by, for example, forming the spring plate 10A into a predetermined shape by blank processing, wire cutting, or laser processing, and then bending the spring plate 10A by pressing or the like, but the manufacturing method is not limited thereto.

FIGS. 4A and 4B show the bearing unit 100A on which the shaft grounding member 1A implemented as described above is mounted. The rolling bearing 50 includes a plurality of rolling elements (balls) 53 between an outer ring 51 and the inner ring 52, the plurality of rolling elements 53 are rollably held by a retainer 54, and the plurality of rolling elements 53 are lubricated by a lubricating oil or a grease composition. Here, the rotating ring is the inner ring 52, into which the shaft 60 directly connected to a motor (not shown) is fitted. The outer ring 51 is a fixed ring and is fixed to a housing 70. The configuration of the rolling bearing 50 is not limited thereto, and may be another configuration.

As shown in FIG. 4A, when the shaft grounding member 1A is mounted on the bearing unit 100A, a conductive spacer 30 is fitted into the inner diameter side of the housing 70 in advance, and then the shaft grounding member 1A is fitted into the inner diameter side of the housing 70. Thereafter, a conductive pressing member 80 is fitted into the inner diameter side of the housing 70, and the pressing member 80 is pressed toward the outer ring 51. Accordingly, the annular portion 11A of the shaft grounding member 1A is pressed against the side surface of the outer ring 51 via the conductive spacer 30. Here, since the cut-and-raised piece 18 of the shaft grounding member 1A is elastically deformed by the pressing member 80, the spring reaction force in the axial direction acts on the spacer 30 and the pressing member 80, and as a result, the pressing force against a side surface 51a of the outer ring 51 via the spacer 30 also increases.

The spacer 30 may have a thickness in consideration of the pressing amount of the spring plate 10A, the thickness of the soft conductive member 20, and the like. The annular portion 11A of the shaft grounding member 1A may directly abut against the side surface of the outer ring 51 without providing the spacer 30.

In the inner ring rotating type bearing unit 100A in which the shaft grounding member 1A is not incorporated, the current from the motor normally flows through the shaft 60 to the inner ring 52, and the rolling elements 53 and the outer ring 51 are energized inside the bearing, causing electrolytic corrosion in the rolling bearing 50. On the other hand, in the first embodiment, the soft conductive member 20 in the shaft grounding member 1A is mounted on the housing 70 so as to abut against the side surface 52a of the inner ring 52. The annular portion 11A of the spring plate 10A is electrically connected to the side surface of the outer ring 51 via the conductive spacer 30, and is also electrically connected to the conductive pressing member 80.

Accordingly, the current from the shaft 60 flows from the soft conductive member 20 to the elastic portion 13A and the annular portion 11A of the spring plate 10A through the inner ring 52, and flows to the housing 70 via the cut-and-raised pieces 18 of the annular portion 11A, the outer peripheral edge of the arc portion of the annular portion 11A, the pressing member 80, the spacer 30, and the outer ring 51. Since the outer ring 51 has a large contact area with the housing 70, the current flowing through the outer ring 51 does not pass through the rolling element 53 and flows into the housing 70.

In this way, in the shaft grounding member 1A, since the shaft 60 which is the rotating member and the housing 70 which is the fixing member are grounded, the inside of the bearing is not energized, and the shaft voltage which is the potential difference between the rotating member and the fixing member can be significantly reduced. Therefore, electrolytic corrosion of the rolling bearing 50 can be prevented, and electromagnetic noise can be released through between the shaft 60 which is the rotating member and the housing 70 which is the fixing member.

In the present embodiment, the outer peripheral edge of the arc portion of the annular portion 11A and the spacer 30 abut against the housing 70. Alternatively, the outer peripheral edge and the spacer 30 may be held between the outer ring 51 and the pressing member 80 without abutting against the housing 70. In this case, the current flowing through the annular portion 11A flows to the housing 70 via the outer ring 51 and the pressing member 80.

Since the side surface 52a of the inner ring 52 is in contact with the soft conductive member 20, the side surface 52a of the inner ring 52 is not damaged, and the rotation torque of the inner ring 52 can be prevented from decreasing.

Since the base material of the soft conductive member 20 has the oil absorption property and the oil retention property when the base material is a porous body, oil is easily discharged between the adjacent elastic portions 13A when the shaft rotates, and the oil film is less likely to form. Therefore, the conductivity is good even when the soft conductive member 20 is used in oil. By using the base material of the soft conductive member 20 as a porous body, the friction coefficient can be reduced even when the soft conductive member 20 is used in an environment other than the oil environment, and a reduction in the rotation torque of the inner ring 52 can be prevented.

The spring plate 10A of the shaft grounding member 1A is a thin plate, and an increase in space of the bearing unit 100A can be minimized. Since there is no limitation on the rolling bearing 50 and there is no need to perform any processing, the rolling bearing 50 can be applied to the existing rolling bearing, and the versatility is fairly high.

As described above, by increasing the contact area between the soft conductive member 20 of the shaft grounding member 1A and the side surface 52a of the inner ring 52 of the rolling bearing 50, the shaft voltage between the rotating member and the fixing member can be stably reduced. Since the spring plate 10A is entirely made of a bent thin plate and is an elastic member, by pressing the annular portion 11A of the shaft grounding member 1A toward the outer ring 51, the elastic force due to the pressing acts on the elastic portion 13A, the elastic portion 13A is pushed apart such that the bending angle θ1 shown in FIG. 2B becomes larger, and the entire elastic portion 13A moves toward the rolling bearing 50. Accordingly, the portion of the soft conductive member 20 that is away from the side surface 52a of the inner ring 52 in FIG. 4A also moves toward the rolling bearing 50, and almost the entire soft conductive member 20 comes into contact with the side surface 52a of the inner ring 52. Accordingly, the conductivity between the soft conductive member 20 and the inner ring 52 can be improved, the electrolytic corrosion of the rolling bearing 50 can be more effectively prevented, and the electromagnetic noise can be reduced.

Since the pressing force of the shaft grounding member 1A against the side surface of the outer ring 51 is increased by the cut-and-raised piece 18, even when axial backlash occurs between the outer ring 51 and the housing 70, the fixing of the shaft grounding member 1A is maintained, and the electrical contact between the annular portion 11A and the side surface of the outer ring 51 via the conductive spacer 30 and the electrical contact with the conductive pressing member 80 are maintained. Therefore, it is possible to further stably reduce the shaft voltage described above, and to prevent electrolytic corrosion and reduce electromagnetic noise.

Since the pressing force of the shaft grounding member 1A against the side surface of the outer ring 51 is increased by the cut-and-raised piece 18, even when the fitting between the outer ring 51 and the housing 70 becomes loose, the outer ring 51 can be fixed to the housing 70, and the creep of the rolling bearing 50 can be prevented.

In particular, in the bearing unit 100A in which the housing 70 is made of an aluminum material and the housing 70 and the outer ring 51 are made of different materials, a dimensional change amount due to a difference in thermal expansion coefficient between the housing 70 and the outer ring 51 is large, and creep or loosening of fitting is more likely to occur. Therefore, it is more significant that the pressing force of the cut-and-raised piece 18 in the mounting portion of the shaft grounding member 1A is increased.

In the rolling bearing unit, a disc spring, a wave spring, or the like is generally used in order to prevent creep and backlash in the axial direction. However, the shaft grounding member 1A includes the cut-and-raised piece 18, so that a disc spring, a wave spring, or the like is not required, and the cost of the rolling bearing unit can be reduced.

### First Modification of First Embodiment

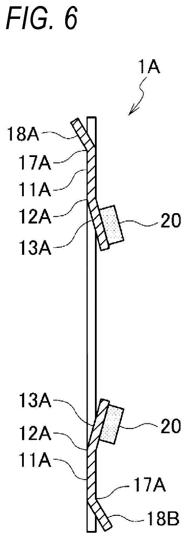

In the shaft grounding member 1A according to the above embodiment, all of the cut-and-raised pieces 18 are bent to one side in the axial direction. Alternatively, as shown in FIGS. 5A, 5B, and 6, one cut-and-raised piece 18A bent to one side in the axial direction and the other cut-and-raised piece 18B bent to the other side in the axial direction may be alternately formed.

In this case, as shown in FIG. 7, when the annular portion 11A of the shaft grounding member 1A is pressed against the side surface of the outer ring 51 via the conductive spacer 30 by the conductive pressing member 80, the cut-and-raised pieces 18A and 18B of the shaft grounding member 1A are also elastically deformed by the pressing member 80, and the spring reaction force in the axial direction also acts on the spacer 30 and the pressing member 80. Accordingly, the pressing force against the side surface 51a of the outer ring 51 via the spacer 30 is also increased, the fixing of the shaft grounding member 1A is more reliably maintained, and the same effect as that of the above embodiment can be attained.

The one cut-and-raised piece 18A and the other cut-and-raised piece 18B are not limited to being alternately formed, and any one of the cut-and-raised pieces 18A and 18B may be formed at any position.

### Second Modification of First Embodiment

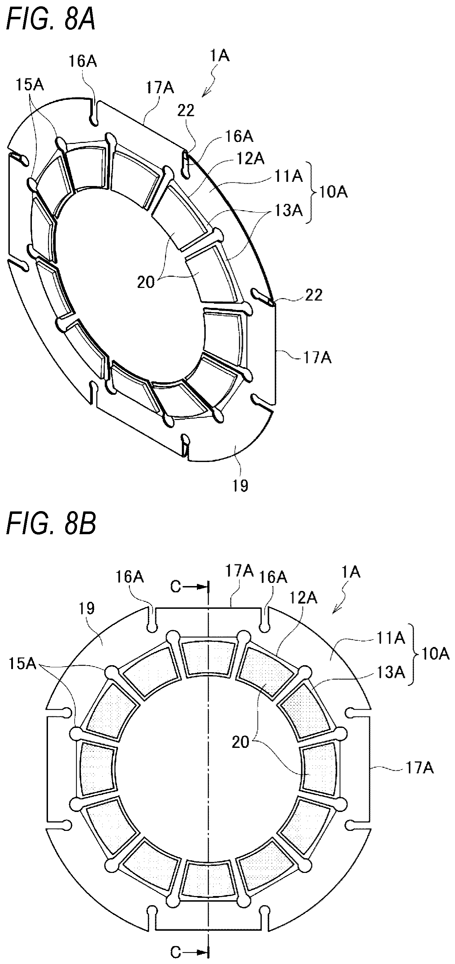

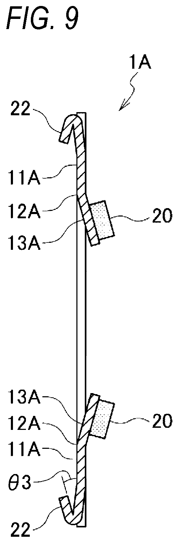

As shown in FIGS. 8A, 8B, and 9, the shaft grounding member 1A may have a plurality of folded pieces 22 (bent portions) instead of the plurality of cut-and-raised pieces 18 which are biasing portions in the above embodiment.

A plurality of notches 16A are formed in the annular portion 11A from the outer peripheral edge toward the inner peripheral side, and the folded piece 22 folded back from the starting point 17A is formed between the adjacent notches 16A and 16A. The folded piece 22 is formed by folding back the distal end toward the back side of the paper surface of FIG. 8B, that is, folded back in a direction opposite to the axial direction in which the elastic portion 13A is bent. The starting point 17A of the folded piece 22 is located on the inner diameter side with respect to a virtual circle connecting a plurality of arc portions in which the folded piece 22 is not formed and in which the outer periphery has an arc shape.

The folded piece 22 may be formed by folding back the distal end toward the front side of the paper surface of FIG. 8B. Although the folded pieces 22 are formed at four positions at equal intervals in FIGS. 8A and 8B, the number of folded pieces 22 is not limited. Further, as shown, the plurality of folded pieces 22 are alternately formed with a plurality of arc portions, but are not limited thereto, and may be formed over the entire circumference of the annular portion 11A.

As shown in FIG. 9, a bending angle θ3 of the folded piece 22 with respect to the annular portion 11A is not limited, and is appropriately set according to a target biasing force (a pressing force). The biasing force can be weakened by reducing the bending angle θ3, and the biasing force can be increased by increasing the bending angle θ3.

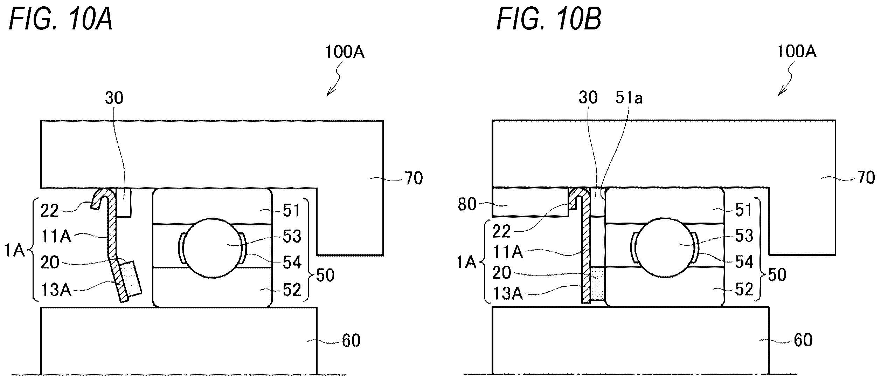

In this case, as shown in FIGS. 10A and 10B, when the annular portion 11A of the shaft grounding member 1A is pressed against the side surface of the outer ring 51 via the conductive spacer 30 by the conductive pressing member 80, the folded piece 22 of the shaft grounding member 1A is also elastically deformed by the pressing member 80, and the spring reaction force in the axial direction also acts on the spacer 30 and the pressing member 80. Accordingly, the pressing force against the side surface 51a of the outer ring 51 via the spacer 30 is also increased, the fixing of the shaft grounding member 1A is more reliably maintained, and the same effect as that of the above embodiment can be attained.

The folded piece 22 according to a second modification is formed by folding back a portion between the adjacent notches 16A and 16A in the axial direction, and may be formed by folding back, in the axial direction, a portion extending from the outer peripheral edge of the annular portion 11A in the radial direction.

In the folded piece according to the second modification, similarly to the cut-and-raised piece according to the first modification, the portion between the pair of notches 16A and 16A cut out from the outer peripheral edge of the annular portion 11A or the portion extending from the outer peripheral edge of the annular portion 11A in the radial direction may include one folded piece folded back to one side in the axial direction and the other folded piece folded back to the other side in the axial direction.

### Second Embodiment: Shaft Grounding Member and Bearing Unit for Outer Ring Rotation

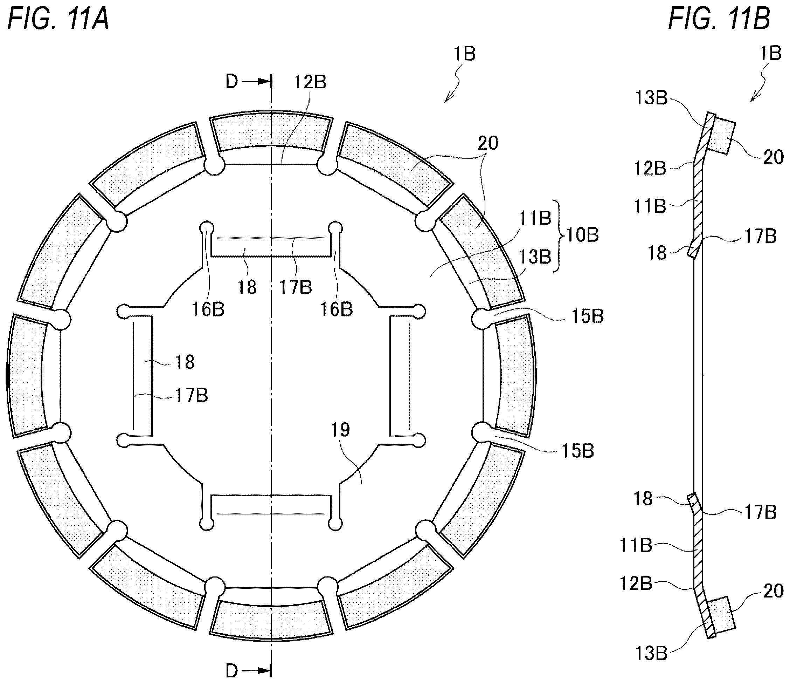

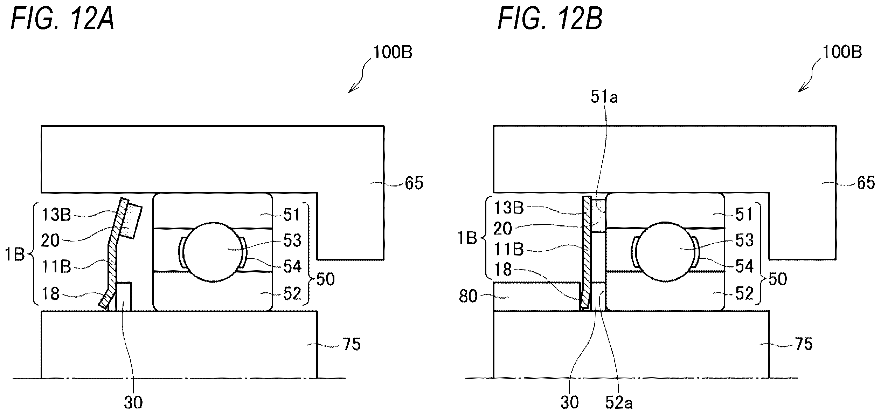

In a second embodiment, a shaft grounding member applied to an outer ring rotating type bearing unit in which a rotating ring is an outer ring and the bearing unit will be described with reference to FIGS. 11A, 11B, 12A, and 12B.

As shown in FIGS. 11A and 11B, a shaft grounding member 1B for outer ring rotation includes a spring plate 10B including an annular portion 11B and a plurality of elastic portions 13B that are bent at an outer diameter side end portion 12B of the annular portion 11B and that extend in a radial shape from the center of the annular portion 11B toward the outer periphery. As shown in FIGS. 12A and 12B, when the elastic portion 13B is mounted on a bearing unit 100B, the elastic portion 13B is bent toward the right side in the figure in a manner of facing the outer ring 51 of the rolling bearing 50. Arc-shaped notches 15B are formed on both sides of the bent portion of the elastic portion 13B with the annular portion 11B.

The soft conductive member 20 is mounted on the surface of each elastic portion 13B on the side facing the outer ring 51 of the rolling bearing 50, and the spring plate 10B and the soft conductive member 20 constitute the shaft grounding member 1B. The soft conductive member 20 is the same as the shaft grounding member 1A described above, and the description thereof is omitted.

A plurality of notches 16B are formed in the annular portion 11B from the inner peripheral edge toward the outer peripheral side, and the cut-and-raised piece 18 (the bent portion) bent from a starting point 17B is formed between the adjacent notches 16B and 16B.

Similarly to the first embodiment, the cut-and-raised piece 18 is bent in the axial direction such that the distal end is inclined toward the back side of the paper surface of FIG. 11A, and may be bent in the axial direction such that the distal end is inclined toward the front side of the paper surface. The starting point 17B of the cut-and-raised piece 18 is located on the outer diameter side with respect to a virtual circle connecting a plurality of arc portions in which the cut-and-raised piece 18 is not formed and in which the inner periphery has an arc shape.

Although the cut-and-raised pieces 18 are formed at four positions at equal intervals, the number of cut-and-raised pieces 18 is not limited. Further, the plurality of cut-and-raised pieces 18 are alternately formed with a plurality of arc portions, but are not limited thereto, and may be formed over the entire circumference of the annular portion 11B.

Although not shown, as shown in FIGS. 5A and 5B, the cut-and-raised pieces 18 may be formed on the front surface side and the back surface side of the annular portion 11B. In this case, the cut-and-raised piece bent to the front surface side and the cut-and-raised piece bent to the back surface side may be alternately arranged as shown in FIGS. 5A and 5B or may be freely arranged.

As shown in FIG. 12A, in the bearing unit 100B, the inner ring 52 of the rolling bearing 50 is fixed to a fixing member 75, and a rotating member 65 is mounted on the outer ring 51. When the shaft grounding member 1B is mounted on the bearing unit 100B, first, the conductive spacer 30 is fitted into the inner diameter side of the fixing member 75. Thereafter, the shaft grounding member 1B and the conductive pressing member 80 are fitted into the inner diameter side of the fixing member 75 in this order, and the cut-and-raised pieces 18 of the shaft grounding member 1B are pressed toward the inner ring 52 by the pressing member 80. Accordingly, as shown in FIG. 12B, the shaft grounding member 1B is mounted on the fixing member 75 such that the soft conductive member 20 abuts against the side surface 51a of the outer ring 51.

In the second embodiment implemented as described above, when the shaft grounding member 1B is pressed, the cut-and-raised piece 18 is also elastically deformed, and the spring reaction force in the axial direction also acts on the spacer 30 and the pressing member 80. As a result, the pressing force against the side surface 52a of the inner ring 52 via the spacer 30 also increases, and the shaft grounding member 1B is reliably fixed to a predetermined region. Then, the annular portion 11B of the spring plate 10B is electrically connected to the side surface of the inner ring 52 via the conductive spacer 30, and is also electrically connected to the fixing member 75 via the conductive pressing member 80.

In the second embodiment, although the current from a motor (not shown) that drives the rotating member 65 flows to the outer ring 51, the current flows from the soft conductive member 20 to the elastic portion 13B and the annular portion 11B of the spring plate 10B through the outer ring 51, and flows to the fixing member 75 via the cut-and-raised pieces 18 of the annular portion 11B, the inner peripheral edge of the arc portion of the annular portion 11B, the pressing member 80, the spacer 30, and the inner ring 52. Since the inner ring 52 has a large contact area with the fixing member 75, the current flowing through the inner ring 52 flows to the fixing member 75 without passing through the rolling element 53. In this way, in the shaft grounding member 1B, since the rotating member 65 and the fixing member 75 are grounded, the inside of the bearing is not energized, and the shaft voltage which is the potential difference between the rotating member 65 and the fixing member 75 can be significantly reduced. Therefore, electrolytic corrosion of the rolling bearing 50 can be prevented, and electromagnetic noise can be released through between the rotating member 65 and the fixing member 75.

As shown in FIG. 12B, by pressing the annular portion 11B of the shaft grounding member 1B toward the inner ring 52 by the pressing member 80 and increasing the contact area between the soft conductive member 20 and the side surface 51a of the outer ring 51, the effect of preventing electrolytic corrosion of the rolling bearing 50 and the effect of releasing electromagnetic noise can be further improved.

In the present embodiment, since the pressing force of the shaft grounding member 1B against the side surface 52a of the inner ring 52 is increased by the cut-and-raised piece 18, similarly to the first embodiment, even when backlash in the axial direction occurs between the inner ring 52 and the fixing member 75 or the fitting becomes loose, the conductivity with the inner ring 52 and the fixing member 75 can be stably secured, and the occurrence of creep of the rolling bearing can be prevented.

In the present embodiment, the annular portion 11B of the shaft grounding member 1B may also directly abut against the side surface of the inner ring 52 without providing the spacer 30.

The inner peripheral edge of the arc portion of the annular portion 11B and the spacer 30 may abut against the fixing member 75 or may be held between the inner ring 52 and the pressing member 80 without abutting against the fixing member 75.

In the present embodiment, instead of the cut-and-raised piece 18, as described in the first modification of the first embodiment, the spring plate may include both one cut-and-raised piece bent to one side in the axial direction and the other cut-and-raised piece bent to the other side in the axial direction, or as described in the second modification of the first embodiment, the spring plate may include a folded piece.

### Third Embodiment: Shaft Grounding Member and Bearing Unit for Inner Ring Rotation

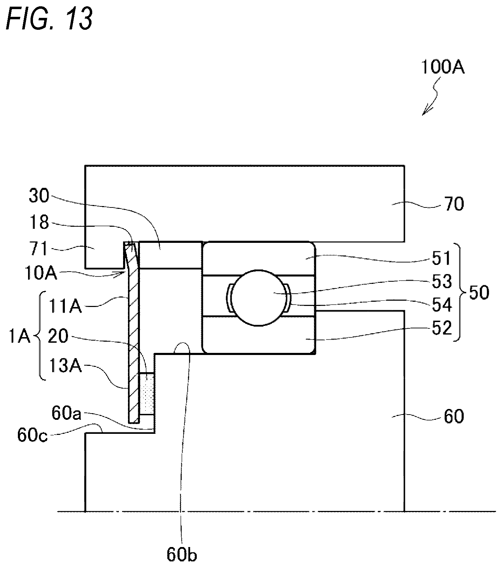

FIG. 13 shows a case in which a shaft grounding member is mounted on a bearing unit whose rotating ring is an inner ring, similarly to the first embodiment. In this case, the shaft 60, which is a rotating member to which the inner ring 52 is fitted, is formed with a stepped surface 60c having a smaller diameter than a fitting surface 60b to which the inner ring 52 is fitted.

The soft conductive member 20 of the spring plate 10A is mounted on the surface of the elastic portion 13A facing the shaft 60 in the axial direction, specifically, on a side surface 60a between the fitting surface 60b to which the inner ring 52 is fitted and the stepped surface 60c, by elastically deforming the elastic portion 13A. Therefore, the soft conductive member 20 can abut against the side surface 60a of the shaft 60.

In such an inner ring rotating type bearing unit 100A, the soft conductive member 20 of the shaft grounding member 1A is mounted on the housing 70 in a manner of abutting against the side surface 60a of the shaft 60. The annular portion 11A of the spring plate 10A is electrically connected to the side surface of the outer ring 51 via the conductive spacer 30, and is also electrically connected to the end surface of a flange portion 71 of the housing 70.

Accordingly, the current from the shaft 60 flows from the soft conductive member 20 to the elastic portion 13A and the annular portion 11A of the spring plate 10A through the side surface 60a of the shaft 60, and directly flows to the housing 70 or flows to the housing 70 via the cut-and-raised pieces 18 of the annular portion 11A, the outer peripheral edge of the arc portion of the annular portion 11A, the spacer 30, and the outer ring 51. Since the outer ring 51 has a large contact area with the housing 70, the current flowing through the outer ring 51 does not pass through the rolling element 53 and flows into the housing 70. In this way, in the shaft grounding member 1A, since the shaft 60 which is the rotating member and the housing 70 which is the fixing member are grounded, the inside of the bearing is not energized, and the shaft voltage which is the potential difference between the rotating member and the fixing member can be significantly reduced. Therefore, electrolytic corrosion of the rolling bearing 50 can be prevented, and electromagnetic noise can be released through between the shaft 60 which is the rotating member and the housing 70 which is the fixing member.

In the present embodiment, unlike the first embodiment, the shaft grounding member 1A is not in contact with the side surface 52a of the inner ring 52. Therefore, the design freedom of the rolling bearing, such as the attachment of the snap ring or the retaining ring, can be improved. In the present embodiment, since the shaft grounding member 1A and the rolling bearing 50 are separated from each other in terms of the position, the lubrication environments thereof can be separately controlled. For example, the shaft grounding member 1A alone can be placed in a dry environment, or the amount of lubricating oil can be increased or decreased between the shaft grounding member 1A and the rolling bearing 50.

In particular, in the bearing unit 100A shown in FIG. 13, the position where the soft conductive member 20 is in contact with the side surface 60a of the shaft 60 has a smaller diameter than the position where the soft conductive member 20 is in contact with the side surface 52a of the inner ring 52 as shown in FIGS. 4A and 4B. Therefore, the circumferential speed of the side surface 60a of the shaft 60 can be reduced, and the generation of the abrasion powder and drag loss can be further reduced.

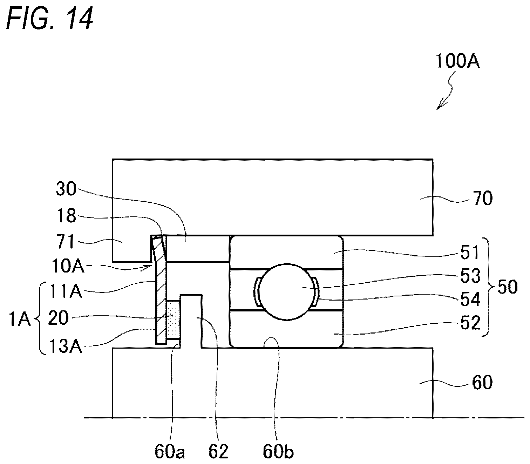

As shown in FIG. 14, in the present embodiment, the shaft 60 may be provided with a flange portion 62 that protrudes from the fitting surface 60b toward the outer diameter side, and the soft conductive member 20 may abut against the side surface 60a of the flange portion 62.

In the present embodiment, by having the configuration of the bent portion including the cut-and-raised piece 18 and the folded piece 22 described in the first embodiment, the conductivity with the outer ring 51 and the housing 70 can be stably secured, and the occurrence of creep in the rolling bearing can be prevented.

### Fourth Embodiment: Shaft Grounding Member and Bearing Unit for Outer Ring Rotation

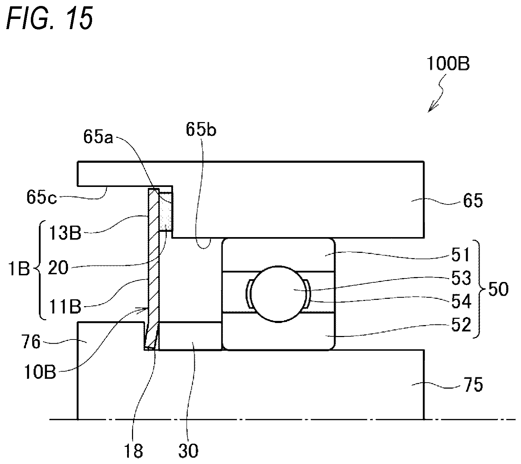

FIG. 15 shows a case in which a shaft grounding member is mounted on a bearing unit whose rotating ring is an outer ring, similarly to the second embodiment. In this case, the rotating member 65 to which the outer ring 51 is fitted has a stepped surface 65c having a larger diameter than a fitting surface 65b to which the outer ring 51 is fitted.

The soft conductive member 20 of the spring plate 10B is mounted on the surface of the elastic portion 13B facing the rotating member 65 in the axial direction, specifically, on a side surface 65a between the fitting surface 65b to which the outer ring 51 is fitted and the stepped surface 65c, by elastically deforming the elastic portion 13B. Therefore, the soft conductive member 20 can abut against the side surface 65a of the rotating member 65.

In such an outer ring rotating type bearing unit 100B, the soft conductive member 20 of the shaft grounding member 1B is mounted on the rotating member 65 in a manner of abutting against the side surface 65a of the rotating member 65. The annular portion 11B of the spring plate 10B is electrically connected to the side surface of the inner ring 52 via the conductive spacer 30, and is also electrically connected to the end surface of a flange portion 76 of the fixing member 75.

Accordingly, the current from a motor (not shown) that drives the rotating member 65 flows from the soft conductive member 20 to the elastic portion 13B and the annular portion 11B of the spring plate 10B through the side surface 65a of the rotating member 65, and flows to the fixing member 75 via the cut-and-raised piece 18 of the annular portion 11B, the inner peripheral edge of the arc portion of the annular portion 11B, the spacer 30, and the inner ring 52 or flows directly to the flange portion 76 of the fixing member 75. Since the inner ring 52 has a large contact area with the fixing member 75, the current flowing through the inner ring 52 flows to the fixing member 75 without passing through the rolling element 53. In this way, in the shaft grounding member 1B, since the rotating member 65 and the fixing member 75 are grounded, the inside of the bearing is not energized, and the shaft voltage which is the potential difference between the rotating member 65 and the fixing member 75 can be significantly reduced. Therefore, electrolytic corrosion of the rolling bearing 50 can be prevented, and electromagnetic noise can be released through between the rotating member 65 and the fixing member 75.

In the present embodiment, unlike the second embodiment, the shaft grounding member 1B is not in contact with the side surface 51a of the outer ring 51. Therefore, the design freedom of the rolling bearing, such as the attachment of the snap ring or the retaining ring, can be improved. In the present embodiment, since the shaft grounding member and the rolling bearing are separated from each other in terms of the position, the lubrication environments thereof can be separately controlled. For example, the shaft grounding member alone can be placed in a dry environment, or the amount of lubricating oil can be increased or decreased between the shaft grounding member and the rolling bearing.

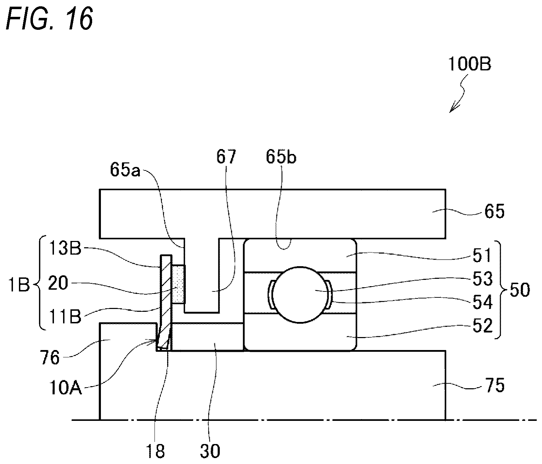

As shown in FIG. 16, in the present embodiment, the rotating member 65 may be provided with a flange portion 67 that protrudes from the fitting surface 65b toward the inner diameter side, and the soft conductive member 20 may abut against the side surface 65a of the flange portion 67.

In particular, in the bearing unit 100B shown in FIG. 16, the position where the soft conductive member 20 is in contact with the side surface 65a of the rotating member 65 has a smaller diameter than the position where the soft conductive member 20 is in contact with the side surface 51a of the outer ring 51 as shown in FIGS. 10A and 10B. Therefore, the circumferential speed of the side surface 65a of the rotating member 65 can be reduced, and the generation of the abrasion powder and drag loss can be further reduced.

In the present embodiment, by having the configuration of the bent portion including the cut-and-raised piece 18 and the folded piece 22 described in the first embodiment, the conductivity with the inner ring 52 and the fixing member 75 can be stably secured, and the occurrence of creep in the rolling bearing can be prevented.

The present invention is not limited to the above embodiment, and may be modified and improved as appropriate.

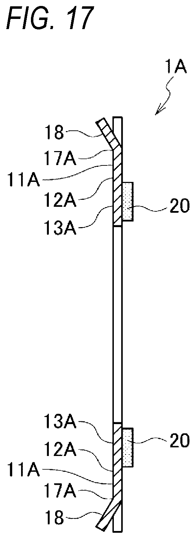

For example, in the above embodiment, the plurality of elastic portions 13A and 13B of the spring plates 10A and 10B are bent toward the rotating ring. Alternatively, the plurality of elastic portions 13A and 13B may also be formed flush with the annular portions 11A and 11B without being bent at the inner diameter side end portion 12A and the outer diameter side end portion 12B. As shown in FIG. 17, for example, in the case of the shaft grounding member 1A for inner ring rotation, the annular portion 11A and the elastic portion 13A are linearly continuous in the cross-sectional view.

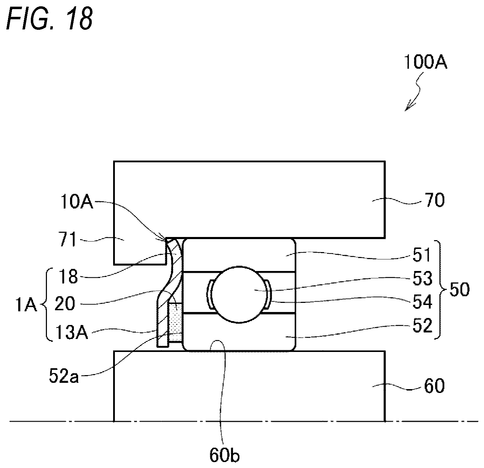

Therefore, in the bearing unit 100A shown in FIG. 18, when the annular portion 11A of the shaft grounding member 1A is held between the flange portion 71 of the housing 70 and the side surface of the outer ring 51, the elastic portion 13A of the shaft grounding member 1A is elastically deformed by an amount equal to the thickness of the soft conductive member 20, and the soft conductive member 20 abuts against the side surface of the inner ring 52 by the bending reaction force of the spring plate 10A. Accordingly, the same function as that of the above embodiment can be achieved.

In this case, since bending of the spring plate 10A is not required, the shaft grounding member 1A can be manufactured at low cost, and the spring plate 10A and the soft conductive member 20 can be bonded together easily.

In the present embodiment, the spring plate includes a plurality of elastic portions extending in a radial shape toward the center of the annular portion. Alternatively, the spring plate may include one elastic portion extending toward the center of the annular portion.

The shaft grounding member according to the present invention can also be suitably used in the case of achieving only one of prevention of electrolytic corrosion and prevention of generation of electromagnetic noise.

When the prevention of electrolytic corrosion is mainly achieved, the "shaft grounding member" in the present specification can be read as an "electrolytic corrosion prevention member", and the "rolling bearing unit" can be read as an "electrolytic corrosion prevention rolling bearing unit". Specifically, the electrolytic corrosion prevention member and the electrolytic corrosion prevention rolling bearing unit are as follows.
(1) An electrolytic corrosion prevention member for a rolling bearing, the electrolytic corrosion prevention member being mounted on a rolling bearing unit including a rolling bearing in which one bearing ring is a fixed ring and the other bearing ring is a rotating ring to prevent electrolytic corrosion of the rolling bearing in the rolling bearing unit, the electrolytic corrosion prevention member including:
   a spring plate including an annular portion and a plurality of elastic portions extending continuously from the annular portion in a radial shape, the spring plate being made of a thin plate of a conductive material; and
   a soft conductive member mounted on a surface of the elastic portion facing the rotating ring,
   in which the soft conductive member is configured to abut against a side surface of the rotating ring, and
   in which the spring plate includes a plurality of bent portions provided at a portion of the annular portion facing a side surface of the fixed ring so as to be bent in an axial direction, the plurality of bent portions being deformed to apply a pressing force to the fixed ring.
(2) The electrolytic corrosion prevention member for a rolling bearing according to (1),
   in which each of the bent portions is a cut-and-raised piece in which a portion between a pair of notches cut out from a peripheral edge of the annular portion is bent in the axial direction.
(3) The electrolytic corrosion prevention member for a rolling bearing according to (1),
   in which a portion between a pair of notches cut out from a peripheral edge of the annular portion of the plurality of bent portions includes one cut-and-raised piece bent to one side in the axial direction and the other cut-and-raised piece bent to the other side in the axial direction.
(4) The electrolytic corrosion prevention member for a rolling bearing according to (1),
   in which each of the bent portions is a folded piece in which a portion between a pair of notches cut out from a peripheral edge of the annular portion or a portion extending from the peripheral edge of the annular portion in a radial direction is folded back in the axial direction.
(5) The electrolytic corrosion prevention member for a rolling bearing according to (1),
   in which a portion between a pair of notches cut out from a peripheral edge of the annular portion of the plurality of bent portions or a portion extending from the peripheral edge of the annular portion in a radial direction includes one folded piece folded back to one side in the axial direction and the other folded piece folded back to the other side in the axial direction.
(6) The electrolytic corrosion prevention member for a rolling bearing according to any one of (1) to (5),
   in which the annular portion is pressed against the side surface of the fixed ring with a spacer interposed therebetween.
(7) The electrolytic corrosion prevention member for a rolling bearing according to any one of (1) to (6),
   in which the soft conductive member is made of at least one selected from a resin-impregnated non-woven fabric, a non-woven fabric, a resin-impregnated woven fabric, a woven fabric, a resin-impregnated soft porous body, and a soft porous body.
(8) The electrolytic corrosion prevention member for a rolling bearing according to any one of (1) to (7),
   in which the plurality of elastic portions of the spring plate are bent toward the rotating ring.
(9) The electrolytic corrosion prevention member for a rolling bearing according to any one of (1) to (7),
   in which the plurality of elastic portions of the spring plate are formed flush with the annular portion.
(10) An electrolytic corrosion prevention member for a rolling bearing, the electrolytic corrosion prevention member being mounted on a rolling bearing unit including a rolling bearing in which one bearing ring is a fixed ring and the other bearing ring is a rotating ring to prevent electrolytic corrosion of the rolling bearing in the rolling bearing unit, the electrolytic corrosion prevention member including:
   a spring plate including an annular portion and a plurality of elastic portions extending continuously from the annular portion in a radial shape, the spring plate being made of a thin plate of a conductive material; and
   a soft conductive member mounted on a surface of the elastic portion facing a rotating member to which the rotating ring is fitted,
   in which the soft conductive member is configured to abut against a side surface of the rotating member, and
   in which the spring plate includes a plurality of bent portions provided at a portion of the annular portion facing a side surface of the fixed ring so as to be bent in an axial direction, the plurality of bent portions being deformed to apply a pressing force to the fixed ring.
(11) The electrolytic corrosion prevention member for a rolling bearing according to (10),
   in which each of the bent portions is a cut-and-raised piece in which a portion between a pair of notches cut out from a peripheral edge of the annular portion is bent in the axial direction.
(12) The electrolytic corrosion prevention member for a rolling bearing according to (10),
   in which a portion between a pair of notches cut out from a peripheral edge of the annular portion of the plurality of bent portions includes one cut-and-raised piece bent to one side in the axial direction and the other cut-and-raised piece bent to the other side in the axial direction.
(13) The electrolytic corrosion prevention member for a rolling bearing according to (10),
   in which each of the bent portions is a folded piece in which a portion between a pair of notches cut out from a peripheral edge of the annular portion or a portion extending from the peripheral edge of the annular portion in a radial direction is folded back in the axial direction.
(14) The electrolytic corrosion prevention member for a rolling bearing according to (10),
   in which a portion between a pair of notches cut out from a peripheral edge of the annular portion of the plurality of bent portions or a portion extending from the peripheral edge of the annular portion in a radial direction includes one folded piece folded back to one side in the axial direction and the other folded piece folded back to the other side in the axial direction.
(15) The electrolytic corrosion prevention member for a rolling bearing according to any one of (10) to (14),
   in which the annular portion is pressed against the side surface of the fixed ring with a spacer interposed therebetween.
(16) The electrolytic corrosion prevention member for a rolling bearing according to any one of (10) to (15),
   in which the soft conductive member is made of at least one selected from a resin-impregnated non-woven fabric, a non-woven fabric, a resin-impregnated woven fabric, a woven fabric, a resin-impregnated soft porous body, and a soft porous body.
(17) The electrolytic corrosion prevention member for a rolling bearing according to any one of (10) to (16),
   in which the plurality of elastic portions of the spring plate are bent toward the rotating ring.
(18) The electrolytic corrosion prevention member for a rolling bearing according to any one of (10) to (16),
   in which the plurality of elastic portions of the spring plate are formed flush with the annular portion.
(19) An electrolytic corrosion prevention rolling bearing unit including:
   a rolling bearing in which one bearing ring is a fixed ring and the other bearing ring is a rotating ring; and
   the electrolytic corrosion prevention member for a rolling bearing according to any one of (1) to (18).

When the prevention of generation of electromagnetic noise is mainly achieved, the "shaft grounding member" in the present specification can be read as an "electromagnetic noise prevention member", and the "rolling bearing unit" can be read as an "electromagnetic noise prevention rolling bearing unit".

## Claims

1. A shaft grounding member for a rolling bearing, the shaft grounding member being mounted on a rolling bearing unit including a rolling bearing in which one bearing ring is a fixed ring and the other bearing ring is a rotating ring, the shaft grounding member comprising:
a spring plate including an annular portion and a plurality of elastic portions extending continuously from the annular portion in a radial shape, the spring plate being made of a thin plate of a conductive material; and
a soft conductive member mounted on a surface of the elastic portion facing the rotating ring,
wherein the soft conductive member is configured to abut against a side surface of the rotating ring, and
wherein the spring plate includes a plurality of bent portions provided at a portion of the annular portion facing a side surface of the fixed ring so as to be bent in an axial direction, the plurality of bent portions being deformed to apply a pressing force to the fixed ring.

2. The shaft grounding member for a rolling bearing according to claim 1,
wherein each of the bent portions is a cut-and-raised piece in which a portion between a pair of notches cut out from a peripheral edge of the annular portion is bent in the axial direction.

3. The shaft grounding member for a rolling bearing according to claim 1,
wherein a portion between a pair of notches cut out from a peripheral edge of the annular portion of the plurality of bent portions includes one cut-and-raised piece bent to one side in the axial direction and the other cut-and-raised piece bent to the other side in the axial direction.

4. The shaft grounding member for a rolling bearing according to claim 1,
wherein each of the bent portions is a folded piece in which a portion between a pair of notches cut out from a peripheral edge of the annular portion or a portion extending from the peripheral edge of the annular portion in a radial direction is folded back in the axial direction.

5. The shaft grounding member for a rolling bearing according to claim 1,
wherein a portion between a pair of notches cut out from a peripheral edge of the annular portion of the plurality of bent portions or a portion extending from the peripheral edge of the annular portion in a radial direction includes one folded piece folded back to one side in the axial direction and the other folded piece folded back to the other side in the axial direction.

6. The shaft grounding member for a rolling bearing according to claim 1,
wherein the annular portion is pressed against the side surface of the fixed ring with a spacer interposed therebetween.

7. The shaft grounding member for a rolling bearing according to claim 1,
wherein the soft conductive member is made of at least one selected from a resin-impregnated non-woven fabric, a non-woven fabric, a resin-impregnated woven fabric, a woven fabric, a resin-impregnated soft porous body, and a soft porous body.

8. The shaft grounding member for a rolling bearing according to claim 1,
wherein the plurality of elastic portions of the spring plate are bent toward the rotating ring.

9. The shaft grounding member for a rolling bearing according to claim 1,
wherein the plurality of elastic portions of the spring plate are formed flush with the annular portion.

10. A shaft grounding member for a rolling bearing, the shaft grounding member being mounted on a rolling bearing unit including a rolling bearing in which one bearing ring is a fixed ring and the other bearing ring is a rotating ring, the shaft grounding member comprising:
a spring plate including an annular portion and a plurality of elastic portions extending continuously from the annular portion in a radial shape, the spring plate being made of a thin plate of a conductive material; and
a soft conductive member mounted on a surface of the elastic portion facing a rotating member to which the rotating ring is fitted,
wherein the soft conductive member is configured to abut against a side surface of the rotating member, and
wherein the spring plate includes a plurality of bent portions provided at a portion of the annular portion facing a side surface of the fixed ring so as to be bent in an axial direction, the plurality of bent portions being deformed to apply a pressing force to the fixed ring.

11. The shaft grounding member for a rolling bearing according to claim 10,
wherein each of the bent portions is a cut-and-raised piece in which a portion between a pair of notches cut out from a peripheral edge of the annular portion is bent in the axial direction.

12. The shaft grounding member for a rolling bearing according to claim 10,
wherein a portion between a pair of notches cut out from a peripheral edge of the annular portion of the plurality of bent portions includes one cut-and-raised piece bent to one side in the axial direction and the other cut-and-raised piece bent to the other side in the axial direction.

13. The shaft grounding member for a rolling bearing according to claim 10,
wherein each of the bent portions is a folded piece in which a portion between a pair of notches cut out from a peripheral edge of the annular portion or a portion extending from the peripheral edge of the annular portion in a radial direction is folded back in the axial direction.

14. The shaft grounding member for a rolling bearing according to claim 10,
wherein a portion between a pair of notches cut out from a peripheral edge of the annular portion of the plurality of bent portions or a portion extending from the peripheral edge of the annular portion in a radial direction includes one folded piece folded back to one side in the axial direction and the other folded piece folded back to the other side in the axial direction.

15. The shaft grounding member for a rolling bearing according to claim 10,
wherein the annular portion is pressed against the side surface of the fixed ring with a spacer interposed therebetween.

16. The shaft grounding member for a rolling bearing according to claim 10,
wherein the soft conductive member is made of at least one selected from a resin-impregnated non-woven fabric, a non-woven fabric, a resin-impregnated woven fabric, a woven fabric, a resin-impregnated soft porous body, and a soft porous body.

17. The shaft grounding member for a rolling bearing according to claim 10,
wherein the plurality of elastic portions of the spring plate are bent toward the rotating ring.

18. The shaft grounding member for a rolling bearing according to claim 10,
wherein the plurality of elastic portions of the spring plate are formed flush with the annular portion.

19. A rolling bearing unit comprising:
a rolling bearing in which one bearing ring is a fixed ring and the other bearing ring is a rotating ring; and
the shaft grounding member for a rolling bearing according to any one of claims 1 to 18.
